# EUROPÄISCHE PATENTSCHRIFT

(11) **EP 3 485 178 B1**
(45) Veröffentlichungstag und Bekanntmachung des Hinweises auf die Patenterteilung: **29.07.2020**
(21) Anmeldenummer: 17721158.8
(22) Anmeldetag: 04.05.2017
(51) Int. Cl.: F16D 65/12

(54) **TRÄGERTOPF FÜR EINE BREMSSCHEIBE, BREMSSCHEIBENEINRICHTUNG**
CARRIER POT FOR A BRAKE DISC, BRAKE DISC ARRANGEMENT
COUPELLE DE SUPPORT SERVANT À UN DISQUE DE FREIN, SYSTÈME DE DISQUE DE FREIN

(30) Priorität: 13.07.2016 DE 102016212715
(43) Veröffentlichungstag der Anmeldung: 22.05.2019
(73) Patentinhaber: Robert Bosch GmbH, 70442 Stuttgart (DE)
(72) Erfinder: STASCH, Martin, 71083 Herrenberg (DE); HUSCHENHOEFER, Wolfgang, 35614 Asslar (DE); KETTELER, Georg, 71696 Möglingen (DE); RAISCH, Sven Robert, 70565 Stuttgart (DE); BAHROUN, Karim, 70569 Stuttgart (DE)
(86) Internationale Anmeldenummer: PCT/EP2017/060641
(87) Internationale Veröffentlichungsnummer: WO 2018/010864

(56) Entgegenhaltungen:
- US-A1- 2002 139 622
- ZF: "Lightweight construction Fighting the flab!", , 16. November 2015 (2015-11-16), XP002772701, Gefunden im Internet: URL:https://www.zf.com/corporate/en_de/mag azine/magazin_artikel_viewpage_22131368.ht ml [gefunden am 2017-08-01]

## Beschreibung

Die Erfindung betrifft einen Trägertopf für eine Bremsscheibe, mit einem radial innenliegenden Nabenringabschnitt zur Befestigung an einer Radnabe und mit einem radial außenliegenden Bremsscheibenringabschnitt zur Befestigung an der Bremsscheibe.

Ferner betrifft die Erfindung eine Scheibenbremseneinrichtung für eine Radbremse eines Fahrzeugs, insbesondere Kraftfahrzeugs, mit wenigstens einer Bremsscheibe und mit wenigstens einem Trägertopf, der mit der Bremsscheibe drehfest verbunden ist.

### Stand der Technik

Trägertöpfe und Bremsscheibeneinrichtungen der eingangs genannten Art sind aus dem Stand der Technik bekannt. Es sind unterschiedliche Arten von Bremsscheibeneinrichtungen für Fahrzeuge bekannt. Im einfachsten Fall sind die Bremsscheibeneinrichtungen einteilig ausgebildet und weisen den Bremsscheibenring sowie den Trägertopf auf. Derartige Bremsscheibeneinrichtungen werden beispielsweise in einem Stück aus Grauguss oder Aluminium gefertigt. Bei zweiteiligen Bremsscheibeneinrichtungen wird der Trägertopf häufig aus einem anderen Material als die Bremsscheibe selbst gefertigt, um die beiden Elemente optimal auf ihre jeweiligen Beanspruchungen anzupassen. Aufgrund der steigenden Anforderungen an Kraftstoffverbrauch und Belastbarkeit ist man darin bestrebt, Gewichtseinsparungen auch an den Bremsen von Kraftfahrzeugen vorzunehmen. Entsprechend besteht der Wunsch, möglichst leichte Materialien zu verwenden. Die Offenlegungsschrift US 2002 / 0139622 A1 offenbart eine Bremsscheibenanordnung, aufweisend eine Bremsscheibe und einen Trägertopf, der mit der Bremsscheibe drehfest verbunden ist. Der Trägertopf weist dabei einen Nabenringabschnitt zur Befestigung an einer Radnabe und einen Bremsscheibenringabschnitt zur Befestigung an der Bremsscheibe auf. Das Dokument "ZF: "Lightweight construction Fighting the flab!", 16. November 2015 (2015-11-16), gefunden im Internet: URL: https://www.zf.com/corporate/en_de/ magazine/ magazin_artikel_viewpage_22131368.html, beschreibt die Verwendung eines Faserverbundwerkstoffs als gewichtssparende Alternative zur Verwendung von Metall, insbesondere Stahl, bei der Herstellung von Fahrzeugkomponenten.

### Offenbarung der Erfindung

Der erfindungsgemäße Trägertopf mit den Merkmalen des Anspruchs 1 hat den Vorteil, dass er bei äußerst geringem Gewicht eine ausreichend hohe Belastbarkeit für Anwendungen auch im Fahrzeug mit höherer Fahrleistung gewährleistet. Dabei besteht das Grundmaterial des Trägertopfs aus Kunststoff, wodurch sich ein vorteilhaft geringes Gewicht des Trägertopfs ergibt. Der Kunststoff wird durch mehrere Fasern durchsetzt, welche dem Trägertopf die notwendige Steifigkeit und Belastbarkeit verleihen. Dabei ist vorgesehen, dass der Trägertopf aus einem insbesondere hochtemperaturfesten Faserkunststoffverbund gefertigt ist, der mehrere Faserschichten mit jeweils einer Vielzahl von Fasern aufweist, wobei die Fasern von zumindest zwei benachbarten Schichten unterschiedlich zueinander ausgerichtet sind. Durch die unterschiedlich ausgerichteten Faserschichten wird eine hohe mechanische Belastbarkeit des Trägertopfs bei geringem Gewicht gewährleistet. Durch die Wahl eines hochtemperaturfesten Kunststoffs wird auch bei Temperaturen oberhalb von 150°C die Formstabilität des Bauteils bzw. Trägertopfs und somit die optimale Krafteinleitung in die Fasern gewährleistet. Die Herstellung von Faserkunststoffverbundwerkstoffen ist in den letzten Jahren außerdem kostengünstiger geworden, sodass die vorteilhafte Ausgestaltung des Trägertopfs nicht zu nennenswerten Kostennachteilen führt.

Gemäß einer bevorzugten Weiterbildung der Erfindung ist vorgesehen, dass die Fasern der zumindest zwei Schichten zumindest im Wesentlichen senkrecht zueinander ausgerichtet sind. Durch die senkrechte Ausrichtung wird gewährleistet, dass der Trägertopf sowohl dann, wenn er auf Druck, als auch dann, wenn er auf Zug belastet wird, also bei einer Belastung des Trägertopfs in beide Drehrichtungen durch eine geringe Schubbelastung des Kunststoffs, die gewünschte Belastbarkeit des Materialverbunds / Faserkunststoffverbunds gewährleistet. Vorzugsweise sind die Schichten symmetrisch zueinander aufgebaut und somit ist der Winkelversatz zweier benachbarter Schichten gering. Durch den beschriebenen Aufbau werden induzierte Spannungen im Verbund minimiert, der die Fasern einbettende Kunststoff entlastet und eine hohe Belastbarkeit des Verbunds gewährleistet.

Erfindungsgemäß ist vorgesehen, dass der Nabenringabschnitt und/oder der Bremsscheibenringabschnitt jeweils wenigstens eine Befestigungsstelle zur Befestigung an der Radnabe beziehungsweise der Bremsscheibe aufweisen, wobei wenigstens eine zusätzliche Stützfaser vorhanden ist, die die jeweilige Befestigungsstelle zumindest im Wesentlichen ringförmig umgibt. An der oder den Befestigungsstellen ist der Trägertopf somit mit der Bremsscheibe beziehungsweise mit der Radnabe beziehungsweise Felge eines Rads des Fahrzeugs verbindbar. Die jeweilige Befestigungsstelle kann beispielsweise als Befestigungsöffnung oder als beispielsweise zapfenförmiger Befestigungsvorsprung ausgebildet sein. Die jeweilige Befestigungsstelle wird von der zusätzlichen Stützfaser zumindest im Wesentlichen ringförmig umgeben. Dadurch wird die Belastbarkeit im Bereich der Befestigungsstelle weiter gezielt erhöht.

Vorzugsweise umgibt die Stützfaser die jeweilige Befestigungsstelle zumindest im Wesentlichen kreisringförmig, um ein gleichmäßiges Lastverhalten beziehungsweise eine gleichmäßige Kraftverteilung zu gewährleisten. Weiterhin ist bevorzugt vorgesehen, dass die Stützfaser bei der Einfassung der Befestigungsstelle den Schichtaufbau des Faserverbundkunststoffs insbesondere axial durchdringt, sodass ein Großteil ihrer Länge senkrecht zur Ausrichtung der Faserschichten steht. Auf diese Weise werden die Verbundschichten des Trägertopfs bei hohen Belastungen im Bereich der jeweiligen Befestigungsstelle durch die beschriebene axiale Verstärkung ideal gegenüber einer Delamination verstärkt und somit die Belastbarkeit der jeweiligen Befestigungsstelle verbessert.

Weiterhin ist bevorzugt vorgesehen, dass die zumindest eine Stützfaser mehrere Befestigungsstellen jeweils ringförmig umgibt. Somit erstreckt sich die Stützfaser um eine Befestigungsstelle ringförmig, von der einen Befestigungsstelle bis zur nächsten Befestigungsstelle, und um die nächste Befestigungsstelle ebenfalls ringförmig. Auf diese Art und Weise werden mehrere Befestigungsstellen durch die Stützfaser miteinander verbunden und jeweils gesondert gestützt.

Besonders bevorzugt ist vorgesehen, dass die Stützfaser abwechselnd eine Befestigungsstelle des Bremsscheibenabschnitts und eine Befestigungsstelle des Radnabenabschnitts ringförmig umgibt. Damit erstreckt sich die Stützfaser zwischen zwei Befestigungsstellen jeweils radial von innen nach außen beziehungsweise von außen nach innen. Vorzugsweise sind die Befestigungsstellen dabei in Umfangsrichtung gesehen versetzt zueinander angeordnet, sodass sich die Stützfaser nicht genau radial nach innen beziehungsweise nach außen erstreckt, sondern entlang einer Kraftflusslinie. Dadurch wird der Trägertopf in Belastungsrichtung verstärkt. Besonders bevorzugt erstreckt sich die Stützfaser derart über den Trägertopf, dass sie alle Befestigungsstellen zumindest einmal jeweils ringförmig umgibt. Hierdurch wird eine besonders hohe Belastbarkeit gewährleistet.

Gemäß einer bevorzugten Weiterbildung der Erfindung ist vorgesehen, dass die Stützfaser zwischen den Befestigungsstellen entlang eines Belastungspfads des Trägertopfs verlaufend angeordnet ist, sodass sie im Betrieb zumindest im Wesentlichen nur auf Zug beansprucht wird. Der Belastungspfad ist der Kraftpfad der zu erwartenden Belastung, die sich im Betrieb des Trägertopfs in einer Radbremse ergibt. Der jeweilige Belastungspfad erstreckt sich dabei von einer Befestigungsstelle des Radnabenabschnitts zu einer Befestigungsstelle des Bremsscheibenabschnitts und ergibt sich entsprechend aus der Anordnung der Befestigungsstellen und der Formgestaltung des Trägertopfs. Der Belastungspfad kann beispielsweise berechnet werden, wobei sich insbesondere zwischen jeder radial innen in Umfangsrichtung verlaufenden radial außen liegenden Befestigungsstelle jeweils ein Belastungspfad ergibt. Vorzugsweise verläuft die Stützfaser jeweils zwischen einer innenliegenden Befestigungsstelle und einer in Umfangsrichtung versetzten dazu liegenden, benachbarten außenliegenden Befestigungsstelle, wie zuvor bereits erläutert, sodass sich ein gleichmäßiges Muster ergibt.

Insbesondere ist dabei vorgesehen, dass sich jeweils zwei Stützfasern oder zwei Stützfaserabschnitte der einen Stützfaser in einem Radialbereich zwischen dem Bremsscheibenringabschnitt und dem Radnabenringabschnitt kreuzen. Hierdurch wird gewährleistet, dass der Bremstopf in beide Drehrichtungen gleich belastbar ist.

Besonders bevorzugt ist vorgesehen, dass die Stützfaser in den Faserkunststoffverbund eingestickt ist. Hierdurch kann die Stützfaser gezielt die gewünschte Form beziehungsweise den gewünschten Verlauf erhalten. Das Einsticken ist mit geringem Zeitaufwand und präzise durchführbar, sodass sich eine hohe Qualität erreichen lässt. Durch das Einsticken der Stützfaser wird insbesondere der zuvor beschriebene Verlauf der Stützfaser axial durch den Faserkunststoffverbund, also das Durchdringen des Stützfaserverbundkunststoffs durch die Stützfaser erreicht. Insbesondere erfolgt das Einsticken in der Art, dass die Stückfaser abschnittsweise auf den Faserkunststoffverbund aufgestickt ist, insbesondere im Bereich der Befestigungsstellen. Die Stützfaser ist also durch das Einsticken bevorzugt zusätzlich zu einer Durchdringung des Faserverbundkunststoffs im Bereich der Befestigungsstellen oder alternativ ausschließlich auf den Faserverbundwirkstoff aufgestickt. Von besonderem Vorteil ist eine annähernd gestreckte Ausrichtung der Stützfaser zwischen den insbesondere benachbarten beziehungsweise der in der Reihe der Stützfaser aufeinander folgenden Befestigungsstellen, was einen optimalen Kraftfluss durch die zumindest eine Stützfaser gewährleistet.

Die erfindungsgemäße Bremsscheibeneinrichtung mit den Merkmalen des Anspruchs 10 zeichnet sich durch die erfindungsgemäße Ausbildung des Trägertopfs aus. Es ergeben sich dadurch die bereits genannten Vorteile.

Weitere Vorteile und bevorzugte Merkmale und Merkmalskombinationen ergeben sich insbesondere aus dem zuvor Beschriebenen sowie aus den Ansprüchen.

Im Folgenden soll die Erfindung anhand der Zeichnung näher erörtert werden. Dazu zeigen
- Figur 1: eine Bremsscheibeneinrichtung in einer perspektivischen Schnittdarstellung,
- Figur 2: eine Schnittdarstellung eines Trägertopfs der Bremsscheibeneinrichtung,
- Figur 3: eine vergrößerte Detailansicht des Trägertopfs und
- Figur 4: den Trägertopf in einer vereinfachten perspektivischen Darstellung.

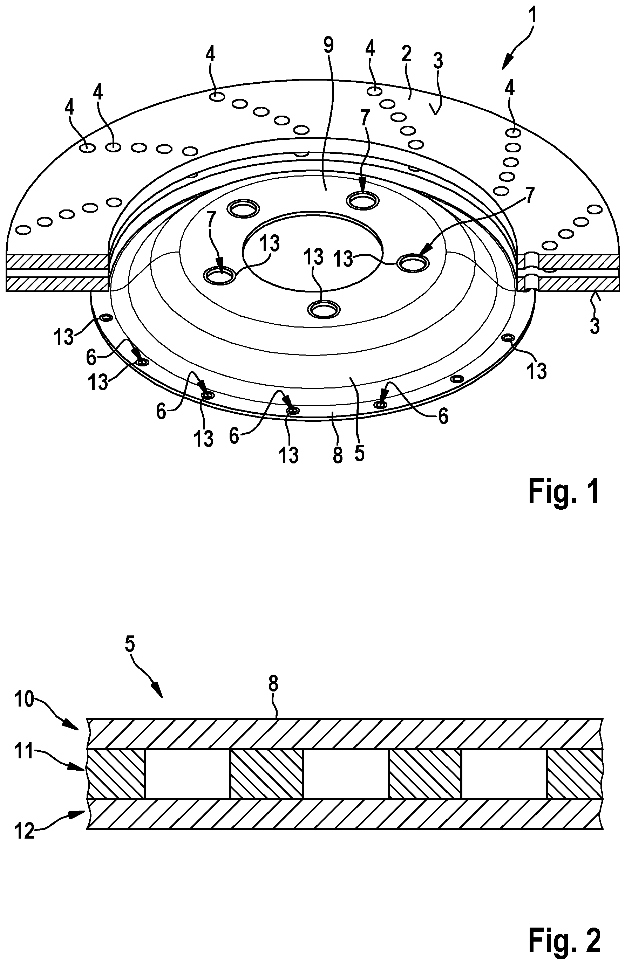

Figur 1 zeigt in einer perspektivischen Schnittdarstellung eine Bremsscheibeneinrichtung 1 für eine Radbremse eines Kraftfahrzeugs. Eine Radbremse in herkömmlichen Kraftfahrzeugen weist üblicherweise einen Bremssattel auf, an welchem Bremsbeläge angeordnet sind, zwischen denen eine Bremsscheibe geführt ist. Werden die Bremsbeläge in Richtung der Bremsscheibe bewegt, wird diese zwischen ihnen eingeklemmt und dadurch eine Bremskraft beziehungsweise ein Bremsmoment erzeugt.

Die in Figur 1 gezeigte Bremsscheibe 2 der Bremsscheibeneinrichtung 1 ist dazu zweckmäßigerweise punktsymmetrisch zur Achse und kreisrund ausgebildet. An ihren axialen Stirnseiten weist sie Bremsflächen 3 auf, die mit den Bremsbelägen der Radbremse zusammenwirken. Die Bremsbeläge sind kreisringförmig ausgebildet und weisen vorliegend mehrere Belüftungsöffnungen 4 zur Kühlung der Bremsscheibeneinrichtung 1 im Betrieb auf. Die Kühlung ist notwendig, weil Bremsscheiben eines Bremsvorgangs hohen mechanischen und thermischen Belastungen ausgesetzt sind. Ursächlich hierfür ist, dass bei der Verzögerung des die Bremsscheibeneinrichtung aufweisenden Fahrzeugs nahezu die gesamte im Fahrzeug gespeicherte kinetische Energie in Wärme umgewandelt werden muss. Weil die Bremsscheibe 2 im Fahrzeug eine ungefederte, rotierende Masse darstellt, bestehen Bestrebungen, die Masse der Bremsscheibe 2 zu reduzieren.

Die Bremsscheibe 2 ist fest mit einem Trägertopf 5 verbunden, welcher an einer Radnabe oder an einer Felge eines Rads des Fahrzeugs befestigbar ist, um die Bremskräfte auf das Rad zu übertragen. Bei herkömmlichen Bremsscheibeneinrichtungen sind der Trägertopf 5 und die Bremsscheibe 2 einstückig miteinander, beispielsweise durch ein Graugussverfahren, hergestellt. Um die Masse der Bremsscheibeneinrichtung 1 zu reduzieren, ist es mittlerweile auch bekannt, Trägertopf 5 und Bremsscheibe 2 getrennt voneinander auszubilden, um vorteilhafte Materialkombinationen für Trägertopf 5 und Bremsscheibe 2, insbesondere für den Reibring der Bremsscheibe 2, zu ermöglichen. Dabei ist es bekannt, neben dem Grauguss auch Aluminium, Stahl oder Silizumkarbid-Keramiken einzusetzen. Trägertopf 5 und Bremsscheibe 2 werden dann durch unterschiedlichste Verbindungsverfahren miteinander verbunden, wie beispielsweise Verbolzen, Verschrauben oder Vergießen.

Bei der in Figur 1 gezeigten Bremsscheibeneinrichtung 1 weist der Trägertopf 5 mehrere Befestigungsstellen 6 und 7 auf, die zur Befestigung des Trägertopfs 5 an der Bremsscheibe 2 und an der Radnabe dienen. Dazu sind die Befestigungsstellen 6 an einem radial außenliegenden Bremsscheibenringabschnitt 8 ausgebildet und gleichmäßig über den Umfang des Trägertopfs 5 verteilt angeordnet. Die Befestigungsstellen 7 sind an einem radial innenliegenden Radnabenringabschnitt 9 des Trägertopfs 5 gleichmäßig über den Umfang verteilt angeordnet. An den Befestigungsstellen 6 erfolgt die Verbindung zu der Bremsscheibe 2 und an den Befestigungsstellen 7 die Verbindung zu der Radnabe.

Die Befestigungsstellen 6 sind gemäß dem vorliegenden Ausführungsbeispiel als Befestigungsöffnungen ausgebildet, welche zum Verschrauben, Verbolzen oder Vernieten des Trägertopfs 5 mit der Radnabe beziehungsweise mit der Bremsscheibe 2 dienen. Alternativ können zumindest einige der Befestigungsstellen 6 und/oder 7 auch als insbesondere zapfenförmige Vorsprünge an dem Trägertopf 5 ausgebildet sein. Auch können die Befestigungsstellen 6 als Taschen ausgebildet sein, in welchen ein separater Befestigungsbolzen eingegossen beziehungsweise eingeformt ist, der von dem Trägertopf 5 axial jeweils vorsteht. Vorzugsweise sind die Befestigungsstellen 6 derart ausgeführt, dass sie durch die Belüftungsbohrungen 4 oder ähnliche Kühlvorrichtungen, wie beispielsweise Luftspalte der Bremsscheibe, oder durch den Einsatz wärmedämmender Materialien im Bereich der Befestigungsstellen 6 wie z.B. Keramikbuchsen oder keramische Beschichtungen auch bei hohen thermischen Belastungen geschützt sind.

Gemäß dem vorliegenden Ausführungsbeispiel ist der Trägertopf 5 aus einem Faserkunststoffverbund gefertigt, der eine ausreichend hohe mechanische und thermische Belastbarkeit bei besonders geringem Gewicht gewährleistet.

Figur 2 zeigt hierzu in einer vereinfachten Schnittdarstellung einen Schnitt durch den Bremsscheibenringabschnitt 8 des Trägertopfs 5. Der Faserverbundkunststoff weist mehrere Schichten 10, 11, 12 von jeweils gleich orientierten beziehungsweise verlaufenden Fasern auf, wobei die Fasern der benachbarten Schichten 10, 11, 12 unterschiedlich, vorliegend senkrecht zueinander ausgerichtet sind. Hierdurch wird eine hohe Festigkeit des Trägertopfs 5 gewährleistet, sodass auch hohe Bremskräfte durch den Trägertopf 5 in beide Drehrichtungen übertragen werden können.

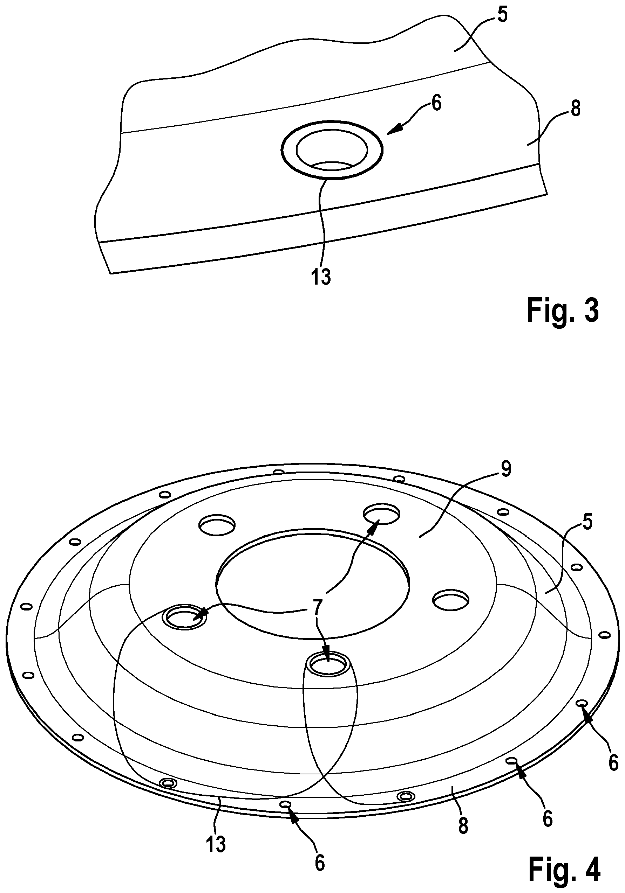

Figur 3 zeigt eine vergrößerte Detailansicht des Trägertopfs 5 im Bereich einer der Befestigungsstellen 6. Zusätzlich zu den Fasern des Faserkunststoffverbunds des Trägertopfs 5 weist dieser eine Stützfaser 13 auf, welche die Befestigungsstelle 6 beziehungsweise die Befestigungsöffnung ringförmig umgibt. Die Stützfaser 13 ist in das Material des Faserkunststoffverbunds eingestickt und besteht insbesondere aus mehreren Fasersträngen, die durch das Sticken miteinander verwoben wurden. Durch die ringförmige Ausgestaltung der Stützfaser 13 wird der Trägertopf 5 im Bereich der Befestigungsstelle 6 zusätzlich verstärkt und gestützt, sodass die Belastbarkeit des Trägertopfs 5 durch minimale Gewichtszunahme durch die Stützfaser 13 deutlich erhöht wird. Zweckmäßigerweise ist jeder Befestigungsstelle 6 eine entsprechende Stützfaser 13 zugeordnet. Auch den Befestigungsstellen 7 ist jeweils eine die jeweilige Befestigungsstelle 7 ringförmig umgebende Stützfaser 13 zugeordnet. Die Stützfaser 13 ist vorteilhafterweise durch einen Stick-Vorgang an dem Trägertopf 5 angebracht, sodass sie den Schichtaufbau des Faserkunststoffverbunds abschnittsweise insbesondere axial durchdringt und somit auf einem Großteil ihrer Länge senkrecht zur Ausrichtung der Faserschichten 10,11,12 steht. Auf diese Weise werden die Verbundschichten 10,11,12 bei hohen Belastungen im Bereich der Befestigungsstelle 6,7 durch die axiale Verstärkung ideal gegenüber einer Delamination verstärkt und somit die Belastbarkeit der Befestigungsstellen 6,7 verbessert. Insbesondere ist die jeweilige Stützfaser 13 im Bereich der Befestigungsstellen abschnittsweise auf den Faserkunststoffverbund bzw. Trägertopf 5 aufgestickt, um die Belastbarkeit noch weiter zu erhöhen.

Durch die Stützfasern 13 werden somit die Befestigungsstellen 6 und 7 das Trägertopf 5 in vorteilhafter Weise gestützt und dadurch die Belastbarkeit des Trägertopfs 5 und der Bremsscheibeneinrichtung 1 insgesamt erhöht.

Figur 4 zeigt eine vorteilhafte Weiterbildung des Trägertopfs 5, wonach eine Stützfaser 13 nicht nur eine Befestigungsstelle 6 oder 7, sondern mehrere Befestigungsstellen 6 und 7 jeweils ringförmig umgibt. Dazu ist die Stützfaser 13 derart auf den Trägertopf 5 gestickt, dass sie abwechselnd eine Befestigungsstelle 7 und eine in Umfangsrichtung benachbarte beziehungsweise beabstandete Befestigungsstelle 6 ringförmig umgibt und zwischen den Befestigungsstellen 6 und 7 sich vorzugsweise zumindest im Wesentlichen in gestreckter Form radial von innen nach außen beziehungsweise von außen nach innen zwischen den Befestigungsstellen 6, 7 erstreckt. Hierdurch ergibt sich der in Figur 4 beispielhaft gezeigte schleifenförmige Verlauf der Stützfaser 13. Insbesondere ist vorgesehen, dass der Stützfaserabschnitt 13 zwischen den Befestigungsstellen 6, 7 dabei entlang eines Belastungspfads des Trägertopfs 5 verlaufend angeordnet ist. Der Belastungspfad wird insbesondere berechnet und stellt den Kraftfluss durch den Trägertopf 5 bei einem Bremsvorgang dar. Durch die vorteilhafte Ausgestaltung wird erreicht, dass hohe Bremskräfte durch den Trägertopf 5 realisiert beziehungsweise von der Bremsscheibe 2 auf das jeweilige Rad übertragen werden können. Durch den in Figur 4 gezeigten Verlauf der Stützfasern 13 wird erreicht, dass sich Stützfaserabschnitte zwischen den Befestigungsstellen 6 und 7 kreuzen, sodass der Trägertopf 5 in beide Drehrichtungen gestärkt beziehungsweise durch die Stützfaser 13 belastbar ausgebildet ist. Figur 4 zeigt einen Abschnitt der Stützfaser 13 zu Anschauungszwecken. Zweckmäßigerweise erstreckt sich die Stützfaser 13 über den gesamten Umfang des Trägertopfs 5, sodass sie zumindest alle Befestigungsstellen 7 und wenigstens jede zweite Befestigungsstelle 6 zumindest einmal ringförmig umgibt. Durch Vorsehen weiterer derartiger Stützfasern können alle Befestigungsstellen 6 und 7 zumindest einmal gestützt werden, wobei sich die Stützfasern 13 dann ebenfalls einmal oder mehrfach im Radialbereich zwischen den Befestigungsstellen 7 und den Befestigungsstellen 6 kreuzen.

Durch die vorteilhafte Ausbildung wird sowohl eine hohe Steifigkeit und Festigkeit des Trägertopfs 5 in Faserrichtung unter Zugbelastung bei geringer Steifigkeit der umgebenden Kunststoffmatrix als auch der Fasern der Faserschichten 10, 11, 12 quer zur Faserrichtung oder Druckbelastung gewährleistet.

Durch die Verwendung des Faserverbundkunststoffs für den Trägertopf 5 mit insbesondere quasiisotopen Eigenschaften zur Sicherung der Drehrichtung der unabhängigen Festigkeit des Trägertopfs 5 werden die genannten Vorteile erreicht. Das Material der Stützfasern 13 sowie der Fasern in den Schichten 10, 11, 12 sowie des Kunststoffs werden entsprechend der mechanischen und thermischen Anforderungen ausgewählt. Durch die Verwendung der lastfahrtgerechten Faserverstärkung durch die Stützfasern 13, die idealerweise derart verlaufen, dass sie nur auf Zug belastet werden, können deutlich höhere Lasten bei geringem Materialansatz erreicht werden. Je nach Wahl der lastfahrtgerechten Faserverstärkung durch die Stützfasern 13 kann auch die Festigkeit des Trägertopfs 5 drehrichtungsabhängig eingestellt werden.

## Patentansprüche

1. Trägertopf (5) für eine Bremsscheibe (2), mit einem radial innenliegenden Nabenringabschnitt (9) zur Befestigung an einer Radnabe und mit einem radial außenliegenden Bremsscheibenringabschnitt (8) zur Befestigung an der Bremsscheibe (2), wobei der Nabenringabschnitt (9) und/oder der Bremsscheibenringabschnitt (8) jeweils wenigstens eine Befestigungsstelle (7,6) zur Befestigung an der Radnabe beziehungsweise an der Bremsscheibe (2) aufweisen, **dadurch gekennzeichnet, dass** der Trägertopf (5) aus einem Faserkunststoffverbund gefertigt ist, der mehrere Faserschichten (10,11,12) aufweist, wobei die Fasern von zumindest zwei benachbarten Faserschichten (10,11,12) unterschiedlich zueinander verlaufend ausgerichtet sind, und dass wenigstens eine zusätzliche Stützfaser (13) vorhanden ist, die die jeweilige Befestigungsstelle (6,7) zumindest im Wesentlichen ringförmig umgibt.

2. Trägertopf nach Anspruch 1, **dadurch gekennzeichnet, dass** die Fasern der zwei Faserschichten (10,11,12) zumindest im Wesentlichen senkrecht zueinander verlaufend ausgerichtet sind.

3. Trägertopf nach einem der vorhergehenden Ansprüche, **dadurch gekennzeichnet, dass** die jeweilige Stützfaser (13) die Befestigungsstelle (6,7) zumindest im Wesentlichen kreisringförmig umgibt.

4. Trägertopf nach einem der vorhergehenden Ansprüche, **dadurch gekennzeichnet, dass** die jeweilige Stützfaser (13) mehrere Befestigungsstellen (6,7) jeweils ringförmig umgibt.

5. Trägertopf nach einem der vorhergehenden Ansprüche, **dadurch gekennzeichnet, dass** die Stützfaser (13) abwechselnd eine Befestigungsstelle (6) des Bremsscheibenringabschnitts (8) und eine Befestigungsstelle (7) des Radnabenringabschnitts (9) ringförmig umgibt.

6. Trägertopf nach einem der vorhergehenden Ansprüche, **dadurch gekennzeichnet, dass** die jeweilige Stützfaser (13) zwischen den Befestigungsstellen (6,7) entlang eines Belastungspfads des Trägertopfs (5) verlaufend angeordnet ist.

7. Trägertopf nach einem der vorhergehenden Ansprüche, **dadurch gekennzeichnet, dass** sich jeweils zwei Stützfasern (13) oder zwei Stützfaserabschnitte der einen Stützfaser (13) in einem Radialbereich zwischen dem Bremsscheibenringabschnitt (8) und dem Radnabenringabschnitt (9) kreuzen.

8. Trägertopf nach einem der vorhergehenden Ansprüche, **dadurch gekennzeichnet, dass** die Stützfaser (13) in den Faserkunststoffverbund eingestickt ist.

9. Bremsscheibeneinrichtung (1) für eine Radbremse eines Fahrzeugs, insbesondere Kraftfahrzeugs, mit wenigstens einer Bremsscheibe (2) und mit wenigstens einem Trägertopf (5), der mit der Bremsscheibe (2) drehfest verbunden ist, **gekennzeichnet durch** die Ausbildung des Trägertopfs (5) nach einem oder mehreren der Ansprüche 1 bis 8.

## Claims

1. Carrier pot (5) for a brake disc (2), having a radially internal hub ring portion (9) for securing to a wheel hub and having a radially external brake disc ring portion (8) for securing to the brake disc (2), wherein the hub ring portion (9) and/or the brake disc ring portion (8) has/have at least one securing location (7, 6) for securing to the wheel hub or the brake disc (2), **characterized in that** the carrier pot (5) is produced from a fibre plastics composite which has a plurality of fibre layers (10, 11, 12), wherein the fibres of at least two adjacent fibre layers (10, 11, 12) are orientated so as to extend differently relative to each other, and **in that** at least one additional support fibre (13) which surrounds the respective securing location (6, 7) in an at least substantially ring-like manner is present.

2. Carrier pot according to Claim 1, **characterized in that** the fibres of the two fibre layers (10, 11, 12) are orientated so as to extend at least substantially perpendicularly to each other.

3. Carrier pot according to one of the preceding claims, **characterized in that** the respective support fibre (13) surrounds the securing location (6, 7) in an at least substantially annular manner.

4. Carrier pot according to one of the preceding claims, **characterized in that** the respective support fibre (13) surrounds in each case a plurality of securing locations (6, 7) in a ring-like manner.

5. Carrier pot according to one of the preceding claims, **characterized in that** the support fibre (13) alternately surrounds a securing location (6) of the brake disc ring portion (8) and a securing location (7) of the wheel hub ring portion (9) in a ring-like manner.

6. Carrier pot according to one of the preceding claims, **characterized in that** the respective support fibre (13) between the securing locations (6, 7) is disposed along a loading path of the carrier pot (5) .

7. Carrier pot according to one of the preceding claims, **characterized in that** two support fibres (13) or two support fibre portions of the one support fibre (13) intersect in each case in a radial region between the brake disc ring portion (8) and the wheel hub ring portion (9).

8. Carrier pot according to one of the preceding claims, **characterized in that** the support fibre (13) is embroidered into the fibre plastics composite.

9. Brake disc device (1) for a wheel brake of a vehicle, in particular a motor vehicle, having at least one brake disc (2) and having at least one carrier pot (5) which is connected to the brake disc (2) in a rotationally fixed manner, **characterized by** the configuration of the carrier pot (5) according to one or a plurality of Claims 1 to 8.

## Revendications

1. Coupelle de support (5) pour un disque de frein (2), comprenant une portion de bague de moyeu (9) située radialement à l'intérieur pour la fixation à un moyeu de roue et une portion de bague de disque de frein (8) située radialement à l'extérieur pour la fixation au disque de frein (2), la portion de bague de moyeu (9) et/ou la portion de bague de disque de frein (8) présentant à chaque fois au moins une zone de fixation (7, 6) pour la fixation au moyeu de roue, respectivement au disque de frein (2), **caractérisée en ce que** la coupelle de support (5) est fabriquée à partir d'un plastique composite renforcé par des fibres, qui présente plusieurs couches fibreuses (10, 11, 12), les fibres d'au moins deux couches fibreuses adjacentes (10, 11, 12) étant orientées de manière à s'étendre différemment les unes par rapport aux autres et **en ce qu'**au moins une fibre de support supplémentaire (13) est prévue, laquelle entoure au moins essentiellement sous forme annulaire la zone de fixation respective (6, 7).

2. Coupelle de support selon la revendication 1, **caractérisée en ce que** les fibres des deux couches fibreuses (10, 11, 12) sont orientées de manière à s'étendre au moins essentiellement perpendiculairement l'une à l'autre.

3. Coupelle de support selon l'une quelconque des revendications précédentes, **caractérisée en ce que** la fibre de support respective (13) entoure au moins essentiellement sous forme annulaire circulaire la zone de fixation (6, 7).

4. Coupelle de support selon l'une quelconque des revendications précédentes, **caractérisée en ce que** la fibre de support respective (13) entoure à chaque fois sous forme annulaire plusieurs zones de fixation (6, 7).

5. Coupelle de support selon l'une quelconque des revendications précédentes, **caractérisée en ce que** la fibre de support (13) entoure sous forme annulaire en alternance une zone de fixation (6) de la portion de bague de disque de frein (8) et une zone de fixation (7) de la portion de bague de moyeu de roue (9).

6. Coupelle de support selon l'une quelconque des revendications précédentes, **caractérisée en ce que** la fibre de support respective (13) est disposée de manière à s'étendre entre les zones de fixation (6, 7) le long d'un chemin de charge de la coupelle de support (5).

7. Coupelle de support selon l'une quelconque des revendications précédentes, **caractérisée en ce que** deux fibres de support (13) ou deux portions de fibres de support de ladite une fibre de support (13) se croisent à chaque fois dans une région radiale entre la portion de bague de disque de frein (8) et la portion de bague de moyeu de roue (9) .

8. Coupelle de support selon l'une quelconque des revendications précédentes, **caractérisée en ce que** la fibre de support (13) est brodée dans le plastique composite renforcé par des fibres.

9. Dispositif de disque de frein (1) pour un frein de roue d'un véhicule, en particulier d'un véhicule automobile, comprenant au moins un disque de frein (2) et au moins une coupelle de support (5) qui est connectée de manière solidaire en rotation au disque de frein (2), **caractérisé par** la réalisation de la coupelle de support (5) selon l'une quelconque ou plusieurs des revendications 1 à 8.
